# EUROPEAN PATENT SPECIFICATION

(11) **EP 0 865 508 B1**
(45) Date of publication and mention of the grant of the patent: **26.01.2000**
(21) Application number: 96935695.5
(22) Date of filing: 11.10.1996
(51) Int. Cl.: C22B 7/00, C22B 11/02

(54) **TREATMENT OF WASTE PRODUCTS THAT CONTAIN ORGANIC SUBSTANCES**
BEHANDLUNG VON ABFALLPRODUKTEN, DIE ORGANISCHE SUBSTANZEN ENTHALTEN
TRAITEMENT DE DECHETS CONTENANT DES MATIERES ORGANIQUES

(30) Priority: 13.10.1995 SE 9503580
(43) Date of publication of application: 23.09.1998
(73) Proprietor: BOLIDEN MINERAL AB, S-932 81 Skelleftehamn (SE)
(72) Inventor: LEHNER, Theo, S-931 52 Skellefte (SE)
(74) Representative: Lundin, Björn-Eric
(86) International application number: SE9601294
(87) International publication number: WO9713881

(56) References cited:
- EP-A- 0 176 491
- DE-A- 3 146 034
- DE-A- 4 203 475
- DE-C- 4 227 568
- US-A- 4 427 442
- US-A- 4 588 436
- BERGSMANNEN, Volume 4, 1987, AKE HOLMSTROM & LEIF JOHANSSON, "Utvinning av Adelmetaller, Koppar Och Zink Ur Skrot Och Avfall", pages 34-36.

## Description

The present invention relates to the treatment of waste products that contain organic materials , such as plastic and like organic materials, and frequently also containing metal values, including precious metals, without risk of generating dioxins or similar toxic compounds by thermal treatment in a manner which also enables any metal values to be recovered.

The process according to the invention may accordingly be used generally for the treatment of any existing waste product having organic content, either containing metal values or not, but in the following the invention will be described principally from the aspect of processing metal containing waste products. When utilizing the invention for the treatment of organic waste products it is consequently not critical whether the products are of different origin or/and art, so that one or more, but not necessarily all, of the products may contain metal values. In certain cases the process may be very attractive and suitable, also of economical reasons, for destruction purposes only for such waste products having low metal values or even totally avoid of such values.

Particular requirements are placed on the processing of waste products, such as electric scrap, that have both a high metal values content and a high organic content, since it is desirable to recover as much of the metal values as is possible and to take care of the organic fractions in an environmentally accepted or acceptable manner. By "electric scrap" is meant here both electronic scrap and other scrap of similar composition with regard to its metal value content and organic material content. The scrap may comprise scrap from the automobile industry or some other industry, although the invention is primarily suited for processing computer scrap, i.e. worn out computers, personal computers, keyboards, modems and other associated units. Such scrap has hitherto been divided mechanically into carrier material, i.e. the organic fraction, and the "more noble" parts of circuit boards and the like. One drawback with this form of mechanical treatment resides in the not inconsiderable loss of the noble metals, while the costs involved are so high that only minor quantities of particularly valuable scrap are able to carry the costs.

Thermal processing of electronic scrap has been proposed in the art. For instance, the book "Kupfer und Automobilrecycling" by B. Langner describes melting of scrap in a resistance-heated furnace, so that all of the non-ferrous metal content will be converted to a molten phase while organic material present in the scrap is separated in the furnace by partial pyrolysis and by burning the gases separately. The plants required herefor are large and cannot readily be made gas-tight and also require, in all events, the provision of large exhaust gas cleansing plants. Such plants are also expensive to install with respect to processing scrap that has a low noble metal content, as is normally the case, and the recovery of which will cause problems.

Patent Publications DD-B-2842932 and 2876410 describe a shaft furnace combustion process for treating copper-plastic scrap. The process is not suited for scrap that contains noble metals, since the yields are uncertain and because the process is also unsatisfactory from an environmental aspect.

Patent Publication DE-C-2330592 suggests the use of salt baths. However, the baths have to be replaced at a rate which makes the process problematic from an environmental aspect and also relatively expensive.

The German Patent Application DE-A1-4203475 (filing date 1992) proposes melting scrap in an inductively heated furnace, wherein the material is charged to a metal bath in the furnace in the absence of air supply. The organic contents of the scrap undergo pyrolysis and pass partially to the waste gases leaving the furnace. The gases are then burned in an oxygen-enriched air environment and, after being cooled, are finally subjected to an after-burning process over catalysts. The remainder of the organic constituents are converted to carbon and collect on the surface of the bath or in the bath. The proposed method has the character of a pilot method and has not been applied industrially up to the present time, as far as we are aware.

In the German Patent Publication DE-C4227568 it is proposed to smelt worn out computers somewhat crushed in a shaft furnace ,which is divided in two parts, whereby a careful heating for the formation of PCB vapors is carried out in the first stage, which vapors are then caught and transferred to the second stage, in which the temperature is about 1600C, for decomposition to non-toxious gases.

For treatment of waste products containing mainly inorganic constituents including metal values US-A-4 427 442 discloses a process , wherein the material is mixed with flux and a collector metal and smelted in a plasma furnace avoiding any agitation, whereby the metal values are transferred to the collector. Another prior art process for similar waste materials is disclosed in DE-A-3146034, wherein the material is mixed with carbon and a metal oxide, for example iron oxide, and subsequently smelted in the same type of plasma furnace, why no agitation will be achieved within the furnace.

A common feature of the methods hitherto suggested for the thermal treatment or destruction of scrap products of the aforedescribed kind is that they require separate furnaces and other separate processing equipment. Thus, the earlier suggested scrap processing methods require relatively high investment and are therefore seemingly only viable in practice for use with chosen fractions that have particularly high noble metal values. Such investment also requires a guarantee that such fractions will be available for a long time in the future. The treatment of non metal-containing waste products is neither mentioned nor indicated in this connection.

The market concerning electric scrap waste products, particularly worn-out computers and computer accessories, is growing larger each year, and consequently there will be a need for scrap processing methods which are able to deal with successively larger quantities of such material at low costs, particularly for the destruction of said material in an environmentally fully acceptable manner and particularly since the responsibility for dealing with electronic equipment will be placed on the producer in the near future. Scrap processing methods in which the general destruction aspect with no load on the environment can be combined with the recovery of any metal values contained in scrap products of the aforesaid kind with no appreciable metal losses during the process would be of paramount interest, since such a process would be rewarding from the actual aspect of destruction and also from the aspect of the metal values recovered.

The object of the present invention is to provide a method of processing large quantities of waste products that have organic contents, wherein one aspect relates to the thermal treatment of products, such as electric scrap, particularly computer scrap, primarily for recovering the metal value content of the scrap, essentially without losses and without loading the environment with the organic content of the products. Another aspect relates to the destruction of waste products that contain organic materials in an economically and environmentally attractive manner, in which any metal values in the destroyed material will be recovered at the same time.

To this end, the invention is characterized by the steps set forth in the following Claims. The waste products are thus charged to an agitated molten bath or smelt in a manner which prevents essential heating of the products prior to said products being embraced by the agitated smelt. By preventing such essential heating any formation of gaseous, toxic decomposition products from the plastic fractions and any other organic products that may be present is counteracted, so that the organic fractions will be taken up and surrounded by the smelt essentially intact. The waste products are mixed vigorously with the smelt during the treatment process, in the presence of reducible constituents or components and at a temperature of at least 1250°C.

When waste products are treated or processed solely with the intention of destroying or rendering harmless the products, i.e. products that have no essential metal values, the same process is carried out as that for the thermal treatment of metal-containing waste products which can be destroyed or rendered harmless in an economically and environmentally acceptable manner.

An important feature of the inventive concept in this regard is thus that the organic material present in the waste products shall be used for chemical reduction in the smelt. As a result of the vigorous agitation of the smelt, the plastic and other organic constituents present are decomposed thermally to simpler compounds that are capable of sustaining the chemical reduction process in the smelt. As a result of this vigorous agitation of the bath, the organic material is decomposed and thereafter quickly consumed for reduction of the smelt. The end products of the C-content and H-content of the organic material will thus result in complete products of combustion, such as CO₂ and H₂O. The halogen content will accompany the gas as simpler compounds that can be readily extracted by washing the gas. Any metal values in the waste materials will either transfer to the smelt or accompany the gas, depending on the tendency of respective metals to vaporize at prevailing smelt temperatures. Metal that accompanies the gas can be separated therefrom as dust in some suitable known manner, for instance by oxidation and cooling or solely by cooling. The metal values are recovered from the molten phase in some conventional manner, depending on local circumstances and metal winning resources. For instance, all of the metal values in the waste materials can be recovered together with other metal values transferred to the production line when smelt is transferred from the thermal treatment process to a copper production line, either totally or partially, therewith obviating the need of further, separate metal-winning stages.

One suitable method of treating waste materials is to feed the materials to a furnace containing an agitated smelt which contains or is comprised of slag deriving from a non-ferrous metal production process. The furnace may be a smelt reduction furnace, a converter, such as a Kaldo converter for instance, or a slag treatment furnace, and all types of furnaces in which vigorous agitation of the smelt is included as an important feature. It has been found that said treatment can be carried out highly advantageously in conjunction with slag reduction treatment processes in slag fuming furnaces. This unit process is described generally in Mining Magazine, August 1965, Vol. 113, No. 2, pp. 114-122, while the Boliden plant at the Rönnskär smelter, Sweden, is described in an article by O.A. Sundström, Journal of Metals, June 1969.

When using molten slag in the treatment of waste materials, the materials can be advantageously charged together with solid, fractionated slag.

As indicated in the foregoing, smelts other than slag smelts or smelts that are rich in slag can be chosen depending on local conditions, i.e. whether or not suitable smelting or treatment units are available, particularly units in which the gas purifying side is extended to ensure that emissions will not exceed permitted limits.

In order to prevent heating of the waste materials prior to their being taken up by the smelt, the waste materials can be delivered to the smelt through conveyor chutes directed towards the surface of the smelt and discharging in the close proximity thereof.

The invention will now be described in more detail mainly with reference to a preferred embodiment thereof and also with reference to the treatment of waste materials in so-called slag fuming furnaces. The slag fuming process is intended to recover non-ferrous metals from metallurgical slag, primarily slag deriving from lead smelters. The Boliden smelting plant at Rönnskär, Sweden, includes a slag fuming furnace which is primarily used to treat slag that derives from copper smelters. This slag is comprised mainly of fayalite 2 FeO - SiO₂, and also other essential metal values, for instance about 10% Zn, 2% Pb, 1-2% Cu and noble metals. The slag is obtained at a temperature of about 1250°C in a water-cooled furnace and the slag is reduced in a batch operation, by blowing pulverized carbon with air into the slag, through vertical nozzles located beneath the surface of the slag. Each batch is comprised of about 85 tonnes of liquid slag taken from the copper smelter, and about 15 tonnes of cold material comprising a mixture of recycled slag and steel works dust. The reduction process produces metallic zinc vapor and also lead vapor which accompany the waste gases and are separated therefrom by cooling and oxidation, therewith enabling a so-called mix oxide to be recovered by electric gas purification (EGP). This mix oxide will typically contain about 60% Zn and 10% Pb and can be used as raw material in the conventional process in a clinker furnace. This reduction process converts a part of the slag and the sulphur, arsenic and antimony present in the liquid and solid charges to copper matte and speiss. The copper matte typically contains 50-55% Cu, about 15% Fe and 20-25% S, while the speiss contains typically about 50% Cu, 8% Fe, 15% Sb and 10% As. These phases together also contain the whole of the noble metal content of the slag and of the other input materials. The copper-matte and speiss phases are separated from the remaining slag in a downstream furnace, a so-called settlement furnace, under the influence of gravitational forces, since the copper matte and speiss are heavier than the slag. The copper matte and the speiss are transferred to the converting stage of the copper smelter, where the copper matte and speiss are blown to raw copper, which also contains all metals that are more noble than copper, this raw copper later being further refined, by electrolysis among other things. The greatest possible yields of the noble metal content of the raw copper can be recovered in this way.

When waste products that contain organic substances, such as electric scrap comprising worn-out computers and computer accessories, for instance, are charged to the slag fuming furnace, they are charged to the furnace together with or instead of the aforesaid cold material charge, through conveyor chutes which discharge beneath the surface of the slag, which has been vigorously agitated by blowing air/pulverized carbon thereinto. The plastic fractions present in the scrap are decomposed into simpler, oxidizable components by the high temperatures that prevail and by the reducing environment. These simpler components will thus form a reduction agent supplement for reduction of the slag. The major part of the plastic fractions, namely their C-content and H-content will be converted to complete combustion products CO₂ and H₂O and accompany the gas to the chimney, whereas the halogen content will behave as simpler compounds, such as HCl, HF, Cl₂, etc., or as metal compounds, such as Pb, Zn (Cl, Br), which can be removed by normal gas washing processes. Any inorganic or non-metallic fractions in the scrap, such as glass and like fractions, will be dissolved by the slag and embodied therein.

Thus, when destroying and processing electric scrap in slag fuming furnaces, both the destroyed products and the metal contents of the scrap will follow the course taken with the normal process flow diagram, which is thereby essentially undisturbed.

### Example:

A batch of electric scrap (E-scrap) consisting of seven tonnes of computer accessories and twelve tonnes of personal computers were crushed and magnetically fractionated and separated into respective quantities of 42% and 20% of the total quantity. The remaining fractions contained non-ferrous metals, plastic, glass, etc., and had the following mean composition:

**Table I**

| Material | Au | Ag | Cu | Fe | Ni | Zn | Pb | Al₂O₃ |
|---|---|---|---|---|---|---|---|---|
| | gpt | gpt | % | % | % | % | % | % |
| | | | | | | | | |
| Accessories | 58 | 491 | 13.4 | 2.6 | 0.6 | 3.0 | 0.3 | 35.7 |
| PC | 10 | 87 | 7.1 | <0,1 | 0.2 | 1.2 | 1.5 | 23.5 |

The crushed scrap was mixed with recycled slag and charged to the slag fuming furnace with the aid of existing conveyor belts, hoppers and conveyor chutes in several batches, with otherwise normal slag fuming treatment. No particular increase in heat generation or dust generation was observed. The fuming process was run in precisely the same way as a normal furnace run, according to the reports given by experienced furnace process operators. Neither was any deleterious affect on product quality observed. Mercury, dioxins and halogens were followed up with extra care during the furnace run. The mercury emission when running the furnace with E-scrap was not found to differ from normal slag fuming processes to any significant degree. Dust emission was also as low as that obtained with normal furnace runs. With regard to dioxins, the emission was slightly higher than emissions under normal conditions. The exposition to the process operators was far beneath the recommended limit values.

The emission of Hg tended to increase with increasing quantities ofE-scrap, but did not differ significantly from normal values.

In excess of 99.99% of the Zn, Pb, Cu, As and Cl present in the E-scrap input, and about 97-98% of Br and F and 92% of Hg were retrievable in the recovered products.

## Claims

1. A method for treatment of waste products that contain organic materials , such as plastic and like organic materials, and frequently also containing metal values, including precious metals by thermal processing, without risk of generating dioxins or similar toxic compounds and in a manner which also enables any metal values to be recovered, **characterized by** delivering the waste products to an agitated smelt in a manner which prevents essential heating of the products and thereby formation of any gaseous, toxic decomposition products from the organic materials content prior to being surrounded by the agitated smelt; mixing the waste products vigorously in the smelt in the presence of reducible constituents or components at a temperature of at least 1250°C, wherewith plastic and other organic materials are thermally decomposed to reduction agents for said reducible constituents or components and therewith converted essentially completely to full combustion products and recovering any present metal values as metal-rich dust and/or metal-rich molten phase, wherein the metal values of the metal-rich products can be recovered therefrom in a suitable known manner.

2. A method according to Claim 1, **characterized** in that the smelt contains or is comprised of slag deriving from a non-ferrous metal production process.

3. A method according to Claim 2, **characterized** by carrying out the method in conjunction with a reducing slag treatment process in a slag fuming furnace.

4. A method according to Claim 2 and Claim 3, **characterized** by charging the waste products together with solid fractionated slag.

5. A method according to Claims 1-4, **characterized** by charging the waste products to the smelt through chutes directed towards the surface of the smelt and discharging in the close vicinity of said surface.

## Patentansprüche

1. Verfahren zur Behand ung von Abfallprodukten, die organische Materialien, wie Kunststoff- und ähnliche organische Materialien enthalten und häufig auch Metalle, einschließlich Edelmetallen, enthalten, durch thermische Behandlung ohne Gefahr einer Erzeugung von Dioxinen oder ähnlicher toxischer Verbindungen und in einer Weise, die auch eine Rückgewinnung von Metallen erlaubt, **dadurch gekennzeichnet, daß** man die Abfallprodukte einer gerührten Schmelze in einer Weise zuführt, die ein wesentliches Erwärmen der Produkte und dabei die Bildung gasförmiger toxischer Zersetzungsprodukte aus dem organischen Materialgehalt verhindert, bevor sie von der gerührten Schmelze umgeben sind, die Abfallprodukte heftig in der Schmelze in Gegenwart reduzierbarer Bestandteile oder Komponenten be einer Temperatur von wenigstens 1250°C vermischt, wobei man Kunststoff- und andere organische Materialien thermisch zu Reduktionsmitteln für die reduzierbaren Beständteile oder Komponenten zersetzt und damit im wesentlichen zu vollständigen Verbrennungsprodukten umwandelt, und vorhandene Metalle als metallreichen Staub und/oder metallische geschmolzene Phase gewinnt, wobei die Metalle der metallreichen Produkte daraus in einer geeigneten bekannten Weise gewonnen werden können.

2. Verfahren nach Anspruch 1, **dadurch gekennzeichnet, daß** die Schmelze Schlacke enthält oder umfaßt, die aus einem Verfahren zur Produktion von nicht-Eisenmetall stammt.

3. Verfahren nach Anspruch 2, **dadurch gekennzeichnet, daß** man das Verfahren in Verbindung mit einem reduzierenden Schlackebehandlungsverfahren in einem Schlackeabrauchofen durchführt.

4. Verfahren nach Anspruch 2 und Anspruch 3, **dadurch gekennzeichnet, daß** man die Abfallprodukte zusammen mit fester fraktionierter Schlacke einspeist.

5. Verfahren nach Anspruch 1 bis 4, **dadurch gekennzeichnet, daß** man die Abfallprodukte der Schmelze über Rutschen zuführt, die zu der Oberfläche der Schmelze hin ausgerichtet sind und die Abfallprodukte in naher Nachbarschaft der Oberfläche abgeben.

## Revendications

1. Procédé pour le traitement de déchets contenant des matériaux organiques, tels que les plastiques et les matériaux organiques similaires, et contenant souvent également des teneurs en métaux incluant des métaux précieux, par traitement thermique sans risque de produire des dioxines ou des composants toxiques semblables et de façon à ce qu'il permette également de récupérer les teneurs en métaux, **caractérisé** en ce que les déchets sont amenés à un bain de fusion agité de façon à ce que cela empêche fondamentalement l'échauffement des produits et ainsi la formation de produits gazeux toxiques quelconques dérivés de la décomposition de matériaux organiques contenus avant d'être soumis au bain de fusion agité; en mélangeant vigoureusement les déchets dans le bain de fusion en présence de constituants ou de composants réductibles à une température d'au moins 1250°C, et par conséquent le plastique et les autres matériaux organiques se décomposent thermiquement en agents de réduction par lesdits constituants ou composants réductibles, et en outre se convertissent pratiquement complètement en produits de combustion pleine et récupèrent n'importe quelles teneurs en métaux présentes comme la poussière riche en métaux et/ou la phase de fusion riche en métaux, dans lesquelles les teneurs en métaux des produits riches en métaux peuvent être récupérées d'une manière appropriée connue.

2. Procédé selon la revendication 1, **caractérisé** en ce que le bain de fusion contient ou comprend des scories provenant d'un procédé de production de métal non-ferreux.

3. Procédé selon la revendication 2, **caractérisé** en ce que le procédé se réalise conjointement avec un procédé de traitement de réduction des scories dans un fourneau à fondre les gaz de fumée des scories.

4. Procédé selon la revendication 2 et la Revendication 3, **caractérisé** en ce que les déchets sont chargés avec les scories solides fractionnées.

5. Procédé selon les revendications 1-4, **caractérisé** en ce que les déchets sont chargés dans le bain de fusion à travers des canaux de coulage dirigées vers la surface du bain de fusion et qu'ils sont déchargés prés de ladite surface.
